# EUROPEAN PATENT APPLICATION

(11) **EP 4 702 835 A1**
(43) Date of publication of application: **04.03.2026**
(21) Application number: 25197839.1
(22) Date of filing: 25.08.2025
(51) Int. Cl.: A01G 31/02, A01G 9/24

(54) **ARRANGEMENT AND METHOD FOR AEROPONICS**

(30) Priority: 29.08.2024 FI 20246072
(71) Applicant: Vext Oy, 02150 Espoo (FI)
(72) Inventor: HAARAMÄKI, Christian, 00220 Helsinki (FI)
(74) Representative: Papula Oy

(57) **Abstract**

A vertical cultivation arrangement and method for growing plants. The arrangement (100) comprises holders (1) for holding the plants (P), the holders being arranged in a vertically arranged support wall (2) such that aerial parts of the plants (P) arrangeable in the holders (1) are positioned on a first side (3) of the support wall and at least most of root parts of said plants (P) are positioned on a second side (4) of the support wall. A second chamber (8) is on the second side (4) of the support wall. An irrigation arrangement (9) is configured to irrigate the plants (P), said irrigation arrangement comprising a liquid reservoir (10) for storing irrigation liquid, a humidifier (11) configured for creating mist from said irrigation liquid, a first passage (13) from the second chamber (8) to the opposite side of the support wall (2) arranged in a first end (8b) of the second chamber for providing an access of said humidified air from the second chamber (8) to the opposite side of the support wall (2), such that both the root parts and the aerial parts of the plants (P) are irrigated with said humidified air.

## Description

### BACKGROUND

The invention relates to a vertical cultivation arrangement for growing plants.

The invention further relates to a method for growing plants having an aerial part and a root part in a vertical cultivation arrangement.

In fogponics it is produced a very light mist that floats in the air like fog to transfer oxygen and nutrients, instead of water droplets being sprayed through a nozzle onto plant roots as in systems known as aeroponic systems. Fogponics systems deliver vapor to the aerial parts, resulting in efficient nutrient uptake and health plants overall.

As plants absorb nutrients best from a 5-25 µm range, the smaller the nutrient particles the easier and faster absorption for the plants. Benefits over hydroponic systems are that the plant requires less energy in root growth and mass, but still able to produce the same yield or even greater. Furthermore, the roots get greater access to oxygen, and are less prone to root rot and diseases spreading from plant to plant.

However, fogponics systems needs still further development.

### BRIEF DESCRIPTION

Viewed from a first aspect, there can be provided a vertical cultivation arrangement for growing plants, the arrangement comprising holders for holding the plants, the holders being arranged in a vertically arranged support wall such that aerial parts of the plants arrangeable in the holders are positioned on a first side of the support wall and at least most of root parts of said plants are positioned on a second side of the support wall, a second chamber on the second side of the support wall, an irrigation arrangement configured to irrigate the plants, said irrigation arrangement comprising a liquid reservoir for storing irrigation liquid, a humidifier configured for creating mist from said irrigation liquid, a first passage from the second chamber to the opposite side of the support wall arranged in a first end of the second chamber for providing an access of said humidified air from the second chamber to the opposite side of the support wall, such that both the root parts and the aerial parts of the plants are irrigated with said humidified air.

Thereby a vertical cultivation arrangement that is highly effective in growing plants thanks to circulating humidified air both to the root parts and the aerial parts of the plants.

Viewed from a further aspect, there can be provided a method for growing plants having an aerial part and a root part in a vertical cultivation arrangement, the arrangement comprising holders for holding the plants, the holders being arranged in a vertically arranged support wall such that aerial parts of the plants arrangeable in the holders are positioned on a first side of the support wall and at least most of root parts of said plants are positioned on a second side of the support wall, a second chamber on the second side of the support wall, an irrigation arrangement configured to irrigate the plants, said irrigation arrangement comprising a liquid reservoir for storing irrigation liquid, a humidifier configured for creating mist from said irrigation liquid, a first passage from the second chamber to the opposite side of the support wall and arranged in a first end of the second chamber for providing an access of said humidified air from the second chamber to the opposite side of the support wall, wherein the method comprises arranging plants to at least one holder, creating humidity with the humidifier, allowing said humidity to enter the second chamber, allowing said humidity to flow from the second chamber through the first passage the opposite side of the support wall, thereby irrigating both the root parts and the aerial parts of the plants with humidity flowing through the second chamber towards the first passage and the opposite side of the support wall and back in the second chamber.

Thereby a vertical cultivation method that is highly effective in growing plants thanks to circulating humidified air both to the root parts and the aerial parts of the plants.

The arrangement and the method are characterised by what is stated in the independent claims. Some other embodiments are characterised by what is stated in the other claims. Inventive embodiments are also disclosed in the specification and drawings of this patent application. The inventive content of the patent application may also be defined in other ways than defined in the following claims. The inventive content may also be formed of several separate inventions, especially if the invention is examined in the light of expressed or implicit sub-tasks or in view of obtained benefits or benefit groups. Some of the definitions contained in the following claims may then be unnecessary in view of the separate inventive ideas. Features of the different embodiments of the invention may, within the scope of the basic inventive idea, be applied to other embodiments.

Various embodiments of the first and second aspect may comprise at least one feature from the following paragraphs:
In one embodiment, the humidifier comprises an ultrasonic device.

An advantage is that mist having small enough liquid droplets may be effectively produced. Furthermore, the humidifier works reliably, since there is no nozzles or jet pipes that are prone to clog up.

In one embodiment, the humidifier is arranged in a device reservoir that constitutes a reservoir for irrigation liquid separate from the liquid reservoir, and wherein liquid level is independent from the liquid level of said liquid reservoir.

An advantage is that the placement of the humidifier in the arrangement is not confined to the liquid reservoir, but the humidifier can be arranged in an optimal position in relation to the plants, e.g. far from the plants.

In one embodiment, the second end of the second chamber is arranged lower than the first end thereof, and the humidifier is arranged in a lower half of the arrangement, preferably under the first chamber.

An advantage is that an easy access to the humidifier may be provided in e.g. maintenance work. Additionally, arranging the humidifier under the first chamber it is possible to prevent or at least essentially reduce heat generated in the humidifier for hampering the root parts of the plants.

In one embodiment, the second end of the second chamber is arranged lower than the first end thereof, and the first passage comprises an opening arranged to the support wall above the holders, or at least at same level as the upmost holder.

An advantage is that irrigation of the root parts of all plants by circulation of humidified air may be guaranteed.

In one embodiment, the second end of the second chamber is arranged higher than the first end thereof, and the humidifier is arranged above the holders, or at least at same level as the upmost holder.

An advantage is that it is possible to prevent or at least essentially reduce heat generated in the humidifier for hampering the root parts of the plants.

In one embodiment, the first passage is provided with a means for preventing light to enter through the first passage into the second chamber.

An advantage is that harmful effects caused by light to the root parts of the plants may be prevented.

In one embodiment, the holder comprises an opening in the support wall, and the plant is arranged in a plant cartridge that is removably arrangeable in the holder.

An advantage is that a holder that is easy and neat to use may be achieved.

In one embodiment, the arrangement comprises a first chamber arranged on the first side of the support wall, the first chamber being defined by said support wall and at least one first chamber wall.

An advantage is that the plants may be protected, and a microclimate created also around the aerial parts of the plants.

In one embodiment, at least one of said at least one first chamber wall comprises a transparent area that is transparent to visible light.

An advantage is that light external to the arrangement may be utilized in the cultivation of the plants.

In one embodiment, the transparent areas of the first chamber walls are provided with a layer of reflective and/or light transmission limiting material configured to limit visible light exiting from the first chamber out to surroundings of the arrangement through said transparent areas.

An advantage is that high-intensity lighting of the plants may be used in the arrangement without disturbing normal living in surroundings thereof.

In one embodiment, the arrangement comprises a humidified air permeable section, allowing humidified air to penetrate out from the arrangement.

An advantage is that typically too dry indoor air can be humidified.

In one embodiment, the arrangement comprises a means for feeding air to the first chamber from surroundings of the arrangement.

An advantage is that humidity of the first chamber can be adjusted for optimizing well-being of the plants.

In one embodiment, the arrangement comprises a room for separate treatment of plants, preferably arranged in the first chamber, said room comprising separate treatment holders and optionally a removable cover arranged on for creating a separate treatment atmosphere on the separate treatment holders.

An advantage is that optimal conditions for growing plants in all their growing/maturing phases may be provided.

In one embodiment, the arrangement comprises a sensor arrangement for monitoring condition of the arrangement, said sensor arrangement comprising at least one sensor selected from
- a temperature sensor arranged to monitor temperature in the first chamber,
- a temperature sensor arranged to monitor temperature in the second chamber,
- a humidity sensor arranged to monitor humidity in the first chamber,
- a humidity sensor arranged to monitor humidity in the second chamber,
- a camera arranged to scan the first side of the support wall, and
- a scale arranged to monitor weight of the vertical cultivation arrangement.

An advantage is that the arrangement and the method may by controlled and adjusted based on data acquired by the sensor arrangement for growing plants optimally. Additionally, the sensor arrangement makes it possible to collect data based on which information relating to the growing and harvesting of the plants may be provided to the user of the arrangement.

In one embodiment, the arrangement comprises a humidifier fan configured to create humidified air by contacting air with mist created by the humidifier, and direct said humidified air to the second chamber at a second end thereof.

An advantage is that the circulation of humidified air may be intensified.

In one embodiment of the method, the vertical cultivation arrangement comprises a room for separate treatment, preferably arranged in the first chamber, said room comprising separate treatment holders, and wherein the method comprises
- arranging at least one plant or seed in the room for separate treatment,
- allowing the plant or seed to grow or mature in said room,
- removing the plant or seed from said room, and
- arranging the plant or seed in the holder arranged in the support wall for further growing.

An advantage is that optimal conditions for growing plants in all their growing/maturing phases may be provided.

Based on the above mentioned, it should be noted that different embodiments mentioned in the above paragraphs may combined in any possible suitable manner for implementing the present invention.

### BRIEF DESCRIPTION OF FIGURES

Some embodiments illustrating the present disclosure are described in more detail in the attached drawings, in which
Figure 1 is a schematic side view of an arrangement and method for vertical cultivation in partial cross-section,
Figure 2 is a schematic cut view along plane A-A of the arrangement and method shown in Figure 1,
Figure 3 is a schematic front view of another arrangement and method for vertical cultivation in partial cross-section,
Figure 4 is a schematic side view of a third arrangement and method for vertical cultivation in partial cross-section,
Figure 5 is a schematic side view of a fourth arrangement and method for vertical cultivation in partial cross-section,
Figure 6 is a schematic side view of a fifth arrangement and method for vertical cultivation in partial cross-section,
Figure 7 is a schematic side view of a sixth arrangement and method for vertical cultivation in partial cross-section, and
Figure 8 is a schematic side view of a seventh arrangement and method for vertical cultivation in partial cross-section.

In the figures, some embodiments are shown simplified for the sake of clarity. Similar parts are marked with the same reference numbers in the figures.

### DETAILED DESCRIPTION

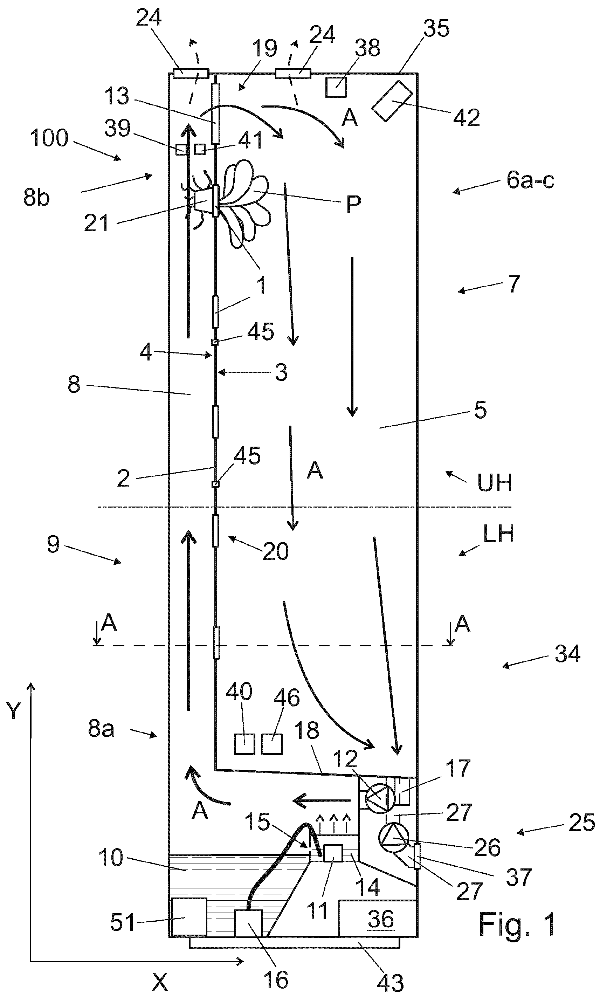

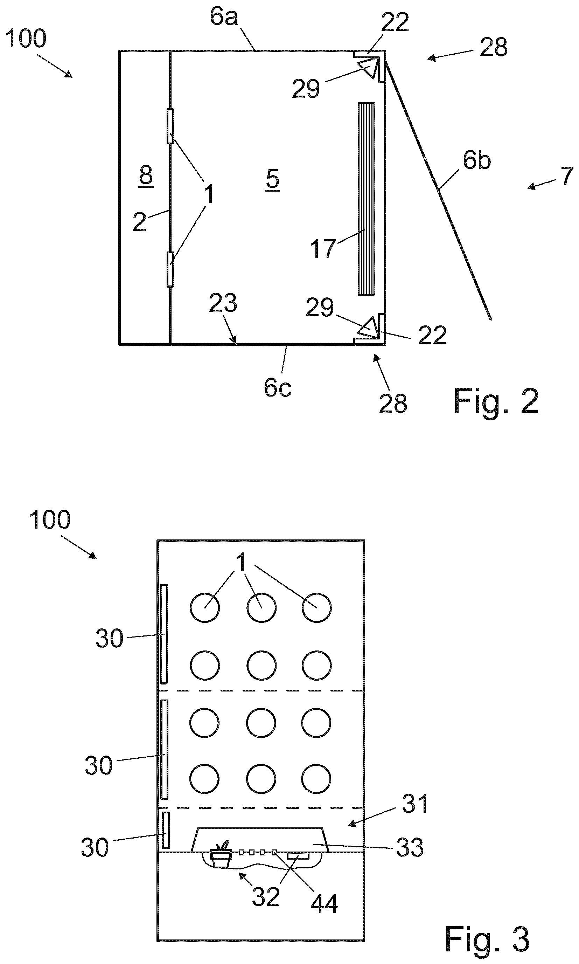

**Figure 1** is a schematic side view of an arrangement and method for vertical cultivation in partial cross-section, and **Figure 2** is a schematic cut view along plane A-A of the arrangement and method shown in Figure 1.

The working principle of the arrangement 100 and the method is based on fogponics. The arrangement 100 comprises at least one holder 1 for holding the plants P. The holder 1 is arranged in a vertically arranged support wall 2. Typically, there are plurality of holders 1 in the support wall 2, their number being selected in range of 1 to 50, or even more. In one embodiment, the number of the holders is selected in range of 20 to 30, such as 27. In one embodiment, the holder 1 is a non-detachable part of the support wall 2. In one embodiment, the holder 1 comprises at least one part detachable from the support wall 2.

In one embodiment, the support wall 2 is positioned to at least substantially 90° angle to the horizontal. In one embodiment, the support wall 2 makes 70°- 90° angle with the horizontal. According to an aspect, the support wall 2 is positioned closer to the vertical orientation than to the horizontal position.

In one embodiment, such as shown in Figure 1, the support wall 2 has an essentially planar structure. In other embodiments, the support wall 2 has a more complicated structure, it may have projections, recesses, curvy or prismatic shapes, etc. Additionally, a first side or surface 3 of the support wall may have different surface contour than a second side or surface 4 thereof.

Similarly, the outer shape of the arrangement may be designed many ways. It may have, e.g., prismatic shape as shown in the Figures, curvy shape, combination of planar and curvy shapes, etc.

In one embodiment, the support wall 2 is detachably attached to the arrangement 100. In one embodiment, the support wall 2 is constructed from multiple modular wall pieces detachably attached to the arrangement 100 and to each other. The detachable support wall and modular wall pieces may e.g. help in cleaning of the arrangement. In one embodiment, there are modular wall pieces that comprise different number and/or different type of holders 1. Thus, the number and/or type of the holders 1 in the arrangement 100 can be changed if needed.

In one embodiment, the holder 1 comprises an opening 20 through the support wall 2, and the plant P is arranged in a plant cartridge 21 that is removably arrangeable in the holder 1. The plant cartridge 21 comprises a medium that provides mechanical support for the plant. In addition, the medium has porosity and water-retention characteristics which allow humidified air to flow to plant roots. The medium may comprise organic material, such as peat, paper or sponge or no-organic material, such as mineral or glass fibre, or combination of organic and non-organic materials. In one embodiment, the holder 1 is completely made of said medium. In one embodiment, the plant cartridge 21 comprises a cup-like or basket-like structure into which the medium and the plant are arranged. Said cup-like or basket-like structure comprises e.g. openings that allow root parts for growing out from the structure and/or catching humidity from humidified air.

The opening 20 can be covered with a cover element (not shown) if there is no plant, so that light is not able to intrude in the second chamber through said opening, and humidified air escape from the second chamber prematurely.

The plant P may be selected from e.g. leafy greens, vegetable-like fruits or flowers.

As used herein, the term "leafy greens" refers to plants whose leaves and stems are used as food. This term includes vegetable greens or leafy vegetables such as lettuce, (e.g. cutting lettuce, batavia lettuce, stem lettuce, iceberg lettuce, and roman lettuce), spinach (e.g. baby spinach and New Zealand spinach), bok choy, tatsoi, mizuna, komatsuna, shiso, mangold, and herbs such as rucola (e.g. rocket rock), basil (e.g. vanilla basil, cinnamon basil, lemon basil, red basil, Thai basil, and bush basil), thyme, parsley, mint (e.g. green mint, peppermint, and apple mint), rosemary, coriander, marjoram, oregano, sage etc.

The plants P are arranged in the holder 1 such that aerial parts of the plants P are positioned on the first side 3 of the support wall and at least most of root parts of said plants P are positioned on the opposite second side 4 of the support wall. The support wall 2 divides the arrangement 100 in two chambers: a first chamber 5 on the first side 3 of the support wall, and a second chamber 8 on the second side 4 of the support wall. The first chamber 5 is defined by said support wall 2 and first chamber walls 6a, 6b, 6c. Additionally, there may be a roof 35 and a bottom 18 that further defines the first chamber.

In one embodiment, the first chamber walls comprise three 6a, 6b, 6c planar walls: a first and a second side walls 6a, 6c and a front wall 6b arranged between the side walls. In one embodiment, the front wall 6b is openable or comprises a door for allowing access to the plants arranged in the holders.

In other embodiments, the first chamber walls comprise less than three or more than three walls. Additionally, it is not necessary that the chamber walls are planar, but they may also be curved etc.

In one embodiment, the first chamber wall 6a-6c comprise at least one transparent area 7 that is transparent to visible light. In one embodiment, the first chamber wall is made practically totally of material transparent to visible light. In one embodiment, there is a frame structure 7 made of non-transparent material that supports the transparent areas 7 of the first chamber walls.

In one embodiment, the transparent areas 7 are provided with a layer 23 of reflective and/or light transmission limiting material. This layer is configured to limit visible light exiting from the first chamber 5 out to surroundings of the arrangement through said transparent areas. In one embodiment, the transparent areas 7 are manufactured from material(s) that have reflective and/or light transmission limiting properties.

In one embodiment, the first chamber wall 6a-6c does not comprise any transparent areas transparent to visible light.

The walls defining the second chamber 8, including the support wall 2 are non-transparent such that light is not allowed to intrude in the second chamber, or it is essentially limited, at least.

The arrangement 100 is provided with an irrigation arrangement 9 that is configured to irrigate the plants P arranged in the holders 1. The irrigation arrangement 9 comprises a liquid reservoir 10 for storing irrigation liquid and a humidifier 11 that is configured for creating mist from said irrigation liquid.

In one embodiment, the liquid reservoir 10 is arranged in lower parts of the arrangement, such as at least partly under the bottom 18 of the first chamber.

The irrigation liquid is water or water that comprises at least one additive, such as nutrient(s), algaecide(s), pH-controlling additive(s) etc.

In one embodiment, the arrangement 100 comprises a water filtering and/or cleaning system 51 for filtering and/or cleaning the irrigation liquid. The working principle of said system 51 may be based on mechanical methods, chemical methods, biological methods, thermal methods, radiation-based methods, advanced oxidation processes (AOPS), magnetic and electric methods, adsorption methods, nanotech-nology-based methods, and/or desalination.

In one embodiment, the humidifier 11 comprises an ultrasonic device, such as an ultrasonic fogger or ultrasonic transducer. This vibrates rapidly at high frequency, such as of approximately 1600-1700 kilohertz (kHz), within the liquid, creating liquid droplets with an average diameter of approximately 3-30 micrometers (µm).

In another embodiment, the humidifier 11 comprises means for compressed air, that produces liquid droplets and humidifies air. In still another embodiment, the humidifier 11 comprises heating elements that produces liquid droplets and humidifies air.

The arrangement may comprise just one humidifier 11, but in some embodiments, there may be two or even more humidifiers.

In one embodiment, the humidifier 11 is controlled by a control unit 36, which may be computer, computation unit or device comprising at least one processor and a memory. The humidifier 11 can be turned on or off and it may have cycles of function controlled by the control unit 36. In another embodiment, the humidifier 11 is controlled by a timer.

The irrigation arrangement 9 is further provided with at least one humidifier fan 12. The humidifier fan 12 is configured to draw or suck air from the first chamber 5, create humidified air by contacting said air with mist created by the humidifier 11, and then forcing said humidified air to the second chamber 8 at a second end 8a thereof.

Said humidified air then flows upwards and irrigates root parts of the plants P in the second chamber 8. Then, humidified air reaches the first passage 13 that is arranged to the first end 8b of the second chamber and enters in the first chamber 5. Thus, air or humidified air is circulated by the humidifier fan 12 that can be placed e.g. close to the humidifier 11; however, the humidifier fan 12 can be positioned another way, too.

The term "passage" means in this description a structure or configuration that allows air or humidified air to pass through. In one embodiment, the passage is an opening, a slit or a gap between parts of the arrangement.

In one embodiment, such as shown in Figure 1, the humidifier fan 12 is arranged in a lower half LH of the arrangement. The lower half LH means parts or section of the arrangement 100 under half-height thereof, whereas an upper height UH means rest of the arrangement, i.e. parts or section of the arrangement arranged above the lower half LH.

In one embodiment, such as shown in Figure 1, the humidifier fan 12 is arranged under the bottom 18 of the first chamber and configured to feed humidified air between the bottom 18 of the first chamber and the liquid reservoir (10) so that a proper contact with mist created by the humidifier 11 is provided.

In one embodiment, the humidifier fan 12 is connected to the first chamber 5 by an air channel 17 the intake of which is arranged to remove air close to one of the first chamber walls. In the embodiment shown in Figure 1, said intake is placed close to the front wall 6b.

The irrigation arrangement 9 is further provided with at least one a first passage 13 that connects the second chamber 8 to the first chamber 5 so that air or humidified air can flow from the second chamber 8 to the first chamber 5 such that not only the root parts arranged in the second chamber 8 but also the aerial parts of the plants arranged in the first chamber 5 are irrigated with said humidified air.

The first passage 13 is placed in a first end 8b of the second chamber, that is the opposite end to the second end 8a of the second chamber. This means in the embodiment shown in Figure 1 that the first passage 13 is placed in the upper end of the support wall 2, since the second end 8a of the second chamber is placed in the lower end of the support wall. In one embodiment, in addition to the first passage, there are additional passages 45 arranged along the length of the support wall. The additional passages 45 as well as the first passage 13 are dimensioned so that their resistance of flow become lower as the distance from the second end 8a increases. Thus, flow of humidified air through all the additional passages 45, as well as through the first passage 13 may be ensured.

In one embodiment, said first passage 13 comprises an opening that is arranged to the support wall 2 above the holders 1, or at least at same level as the upmost holder 1.

In one embodiment, the first passage 13 is provided with a means 19 for preventing - or at least essentially reducing - light to enter through the first passage into the second chamber 8. Thus, the root parts of the plants P are not exposed to light. The means 19 may comprise a grille, a lattice, or a porous element, for instance.

In one embodiment, the humidifier 11 is arranged in a device reservoir 14. The device reservoir 14 constitutes a reservoir for irrigation liquid separate from the liquid reservoir 10. The volume of the device reservoir 14 is typically smaller than the volume of the liquid reservoir 10. In one embodiment, the liquid level in the device reservoir 14 is independent from the liquid level of the liquid reservoir 10. In one embodiment, the liquid level in the device reservoir 14 is controlled such that there is about 2 cm - 5 cm liquid on or above the humidifier 11. This ensures a proper working of the humidifier 11.

In another embodiment, the humidifier 11 is arranged in the liquid reservoir 10.

In one embodiment, the irrigation system comprises a pump 16 that is arranged to feed liquid from the liquid reservoir 10 to the device reservoir 14. In one embodiment, the operation of the pump 16 is controlled by the control unit 36. The pump 16 may operate intermittently, i.e. fill the device reservoir 14 when the liquid level therein falls to a certain level, observed by e.g. a suitable sensor (not shown), or continuously. In one embodiment, the pump 16 is arranged to operate at the rhythm of the humidifier 11.

In one embodiment, the liquid reservoir 10 can be emptied to e.g. another reservoir arranged outside the arrangement 100. This emptying may relate to renewing of liquid in the liquid reservoir 10. In one embodiment, the liquid reservoir 10 can be emptied by using the pump 16.

In one embodiment, an emptying arrangement 15 is configured for allowing liquid to leave at least partly the device reservoir 14 with a certain (low) pace. This way change of liquid in the device reservoir 14 may be hastened. In one embodiment, the device reservoir 14 is arranged to be emptied through the pipe or tube connected to the pump 16.

In one embodiment, the arrangement 100 comprises at least one light source 28 of artificial light arranged to light the first chamber 5 and the aerial parts of the plants P therein. The light source 28 comprises typically several light units 29, preferably LED (Light Emitting Diode) units.

The light source 28 provides light the plants need in photosynthesis that creates energy for their growth and development. For photosynthesis, plants are able to use light in the 400 to 700 nanometer wavelength range, which corresponds more or less with the range of light visible to the human eye. This portion of the spectrum is known as photosynthetically active radiation (PAR).

In one embodiment, the wavelength of the light emitted by the light source 28, and thus the light's color, is adjustable. In addition to a proper spectral range, an adequate light intensity must also be provided in order to meet the plant's requirements. The wavelength and the light intensity are controlled by the control unit 36.

In one embodiment, the light units 29 are arranged to the structure of the first chamber walls 6a-c. In the embodiment shown in Figures 1 and 2, at least some of the light units 29 are provided in a frame 22 of first chamber that connects chamber walls 6a-6c. In one embodiment, there are light units 29 arranged in an upper edge and/or a lower edge of the first chamber 5.

In one embodiment, at least one air permeable section 24 is provided in the upper part of the arrangement. Said section 24 allows some amount of humidified air to penetrate out from the arrangement 100 in surroundings thereof. This may help in regulating humidity level of a surrounding room and get heat away from the arrangement through transpiration. The section 24 may comprise a grille, a lattice, or a porous element, for instance. The air permeable section 24 may be arranged on the first 3 or the second 4 side of the support wall, or both as shown in Figure 1. In one embodiment, the permeability of the air permeable section 24 is adjustable, for example manually or electronically. In another embodiment, the permeability of the air permeable section 24 is non-adjustable.

In one embodiment, the arrangement 100 is provided with a means for feeding air 25 from surroundings of the arrangement to the first chamber 5. Said means may comprise an air fan 26 that is connected by an air feed channel to the first chamber 5. In one embodiment, the means for feeding air 25 comprises a filter element 37 that purifies air sucked in the arrangement. The means for feeding air 25 may help in regulating humidity level in the arrangement, and feed fresh air containing CO₂ and O₂ for use by the plants P.

In one embodiment, the arrangement 100 is provided with a sensor arrangement 34 that include at least one sensor configured for monitoring condition of the arrangement 100. The sensor arrangement 34 may comprise one or more sensor(s) selected from e.g. a first temperature sensor 38 arranged to monitor temperature in the first chamber 5, a second temperature sensor 39 arranged to monitor temperature in the second chamber 8, a first humidity sensor 40 arranged to monitor humidity in the first chamber 5, a second humidity sensor 41 arranged to monitor humidity in the second chamber 8, at least one camera 42 arranged to scan the first side 3 of the support wall and plants arranged in the holders, a CO₂ sensor arranged to monitor carbon dioxide level in the first chamber 5 and a scale 43 arranged to monitor weight of the vertical cultivation arrangement 100.

The sensor arrangement 34 may also comprise one or more sensor(s) measuring or detecting oxygen level, light intensity, light spectrum, air pressure, irrigation liquid properties, such as pH level, electrical conductivity (EC), dissolved oxygen (DO), temperature, turbidity, liquid level, flow rate, salinity, and oxidation-reduction potential (ORP).

The sensor arrangement 34 may also comprise one or more sensor(s) measuring or detecting growing media properties, such as soil moisture, soil temperature, soil pH, soil electrical conductivity (EC), soil aeration, nutrient levels, soil compaction.

The sensor arrangement 34 may also comprise one or more sensor(s) measuring or detecting, e.g., relating plant health monitoring, such as chlorophyll content, normalized difference vegetation index (NDVI), leaf wetness, stem diameter.

The sensor arrangement 34 may also comprise one or more sensor(s) measuring or detecting environmental parameters, such as UV index, pest detection, weather conditions.

The sensor arrangement 34 may also comprise one or more sensor(s) measuring or monitoring parameters relating to energy monitoring, such as power consumption and solar radiation.

The sensor arrangement 34 may also comprise automation and/or control sensors, such as valve position(s), pump status and actuator position(s).

The sensor arrangement 34 is preferably connected to the control unit 36 that may use data gathered from the sensor arrangement in controlling the arrangement and/or produce information about the condition of the arrangement 100 to the user thereof.

**Figure 3** is a schematic front view of another arrangement and method for vertical cultivation in partial cross-section.

In one embodiment, the light source 28 comprises plurality of light units 29 that are grouped in at least two independently controlled light groups 30. The embodiment shown in Figure 3 has three light groups 30 arranged one on top of the other. The number of the light groups may be even higher. One light group 30 may comprise one or more light units 29, such as LEDs.

In one embodiment, each of the light groups 30 is configured to light only a certain part of the first chamber 5 and plants therein. The light groups 30 are configured to be controlled to emit light having same or different wavelengths and at same or different intensity. In other words, light emitted by a particular light group 30 may be adjusted independently from other light groups so that plants lighted by said light group receive optimal spectral range and light intensity.

In one embodiment, the operation of the light groups 30 is controlled by the control unit 36.

It is to be noted that at least some of the light groups can be arranged side by side in the arrangement.

In one embodiment, the arrangement 100 comprises a room for separate treatment 31 that is placed in the first chamber 5. In one embodiment, such as shown in Figure 3, the room for separate treatment 31 is placed on the bottom 18 of the first chamber.

The room for separate treatment 31 comprises at least one, preferably several, treatment holder 32 for receiving plants, parts of plants (such as cuttings) or seeds that needs special environmental conditions (such as humidity, temperature and/or lighting), or at least environmental conditions that clearly differ from those the plants in the holders 1 are needing. A removable cover 33 may be arranged on separate treatment holder(s) 32 so that a special treatment atmosphere on said treatment holders 32 is created.

In one embodiment, the room 31 is at least essentially isolated from the first chamber 5, i.e. there is no ventilation form the first chamber 5 to the room 31. In another embodiment, the room 31 can change some air or humidity with the first chamber 5.

In one embodiment, the treatment holder 32 is at least substantially non-permeable to humidified air as such: humidified air is arranged to enter in the room 31 through the bottom thereof, such as through one or more breathing openings 44 provided in said bottom.

In one embodiment, at least one light group 30 provides light in the room 31.

In one embodiment, seeds to be germinated are arranged in the room 31.

In one embodiment, one or more cuttings are arranged in the room 31.

In one embodiment, plants in their seedling phase are arranged in the room 31. As used herein, the "seedling phase" spans from the emergence of the seed leaves to the seedling height of about a couple of centimeters, such as three centimeters.

In one embodiment, already mature plants needing special environmental conditions are arranged in the room 31.

In one embodiment, the plants, cuttings or seeds that have grown or matured in the room 3 are removed therefrom, and then arranged in the holders 1 for further growing.

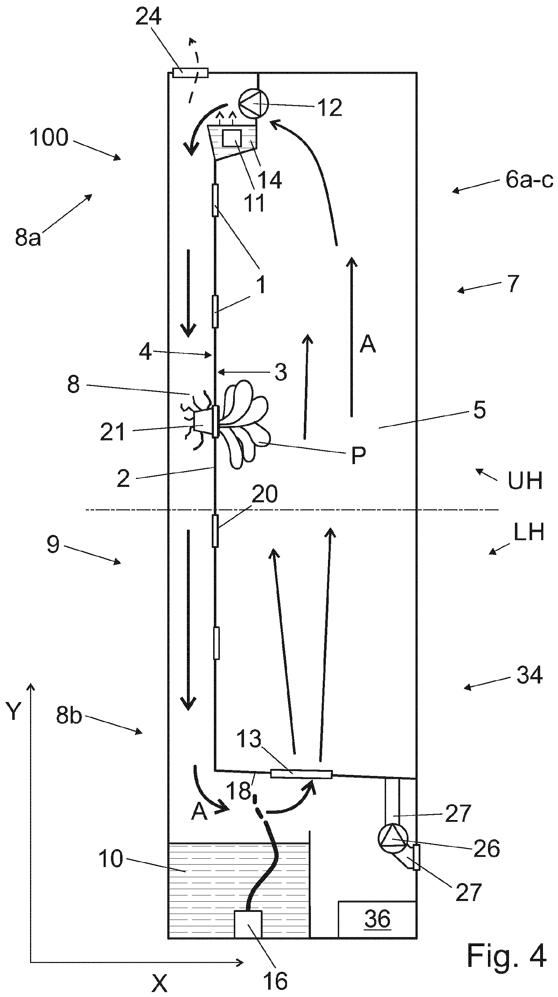

**Figure 4** is a schematic side view of a third arrangement and method for vertical cultivation in partial cross-section.

In one embodiment, the second end 8a of the second chamber is arranged higher than the first end 8b thereof, and the humidifier 11 is arranged in the upper half UH of the arrangement. Thus, said ends and the humidifier are positioned the other way around as in the embodiment shown in Figure 1. The humidifier 11 creates mist that is mixed with air taken from upper part of the first chamber 5, creating thus humidified air. Said humidified air then flows downwards and irrigates root parts of the plants P in the second chamber 8. Then, humidified air reaches the first passage 13 that is arranged to the first end 8b of the second chamber and enters in the first chamber 5. In the embodiment shown in Figure 4, the first passage 13 is arranged to the bottom 18 of the first chamber. Air or humidified air is circulated by the humidifier fan 12 that can be placed e.g. close to the humidifier 11; however the humidifier fan 12 can be positioned another place, too.

The liquid reservoir 10 and the pump 16 that is configured to pump liquid in the device reservoir 14 can be arranged in the bottom of the arrangement, such as shown in Figure 4, but other positions thereof are possible, too.

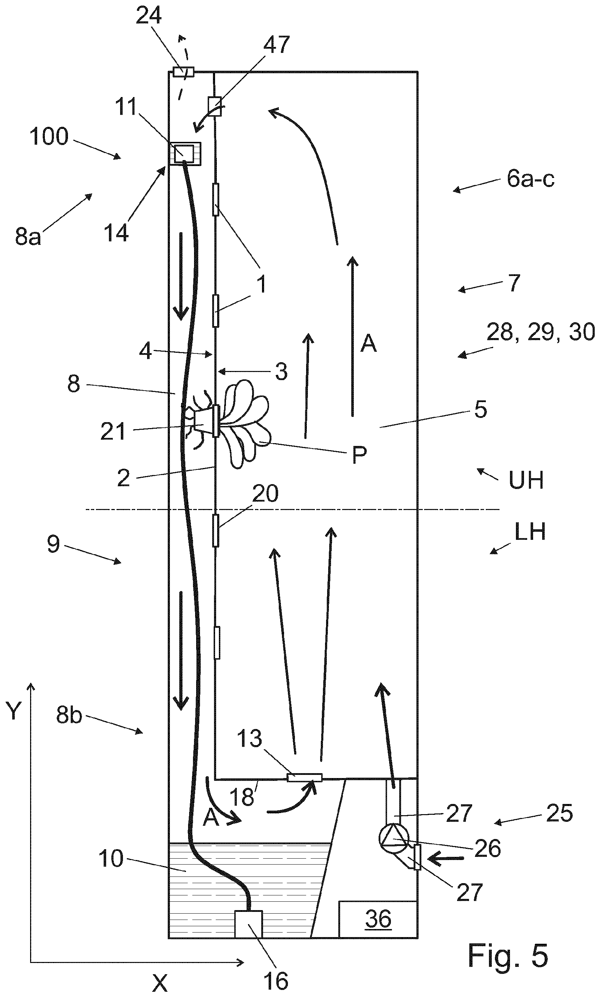

**Figure 5** is a schematic side view of a fourth arrangement and method for vertical cultivation in partial cross-section. In this embodiment, the arrangement 100 does not include the humidifier fan 12. Instead, humidified air created by the humidifier 11 is flowing inside the arrangement by air flow created by the means for feeding air 25, including the air fan 26, from surroundings of the arrangement to the first chamber 5.

In one embodiment, humidified air flows downwards in the second chamber 8, then enters the first chamber 5 through a first passage 13 arranged in the lower end 8b of the second chamber, flows through the first chamber upwards, and enters the second chamber 8 through a second passage 47 arranged in the upper end 8a of the second chamber.

In one embodiment, the humidifier 11 is arranged in the upper half UH of the arrangement. In one embodiment, such as shown in Figure 5, the humidifier 11 is arranged near to the upper end of the second chamber, from which humidified air flows or drops downwards to the root parts of the plants P. The humidifier 11 may be arranged in a device reservoir 14 as described earlier in this description.

Also in this embodiment, the arrangement 100 may comprise the light source 28, the light units 29 the light groups 30 as described earlier in this description.

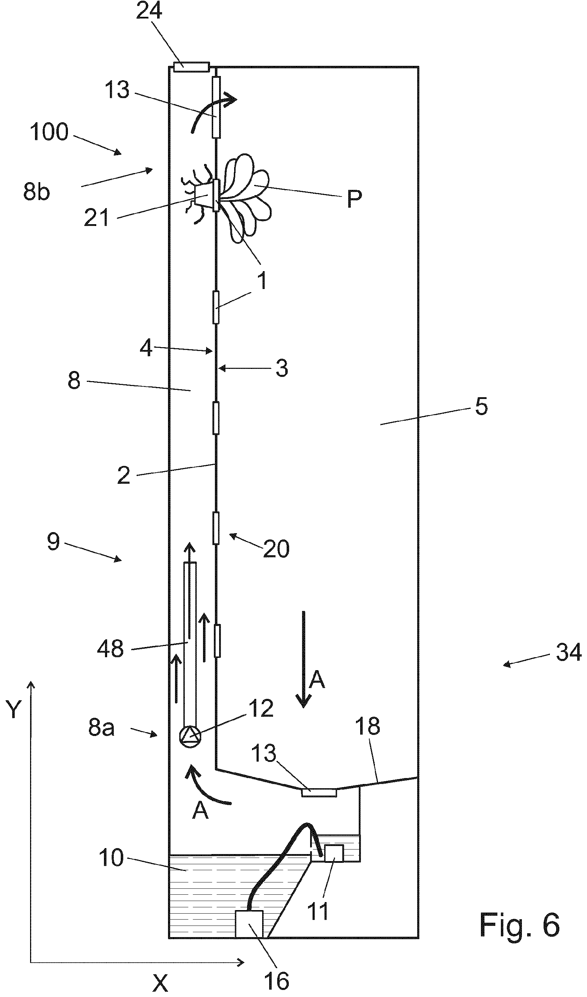

**Figure 6** is a schematic side view of a fifth arrangement and method for vertical cultivation in partial cross-section. In one embodiment, the arrangement 100 is provided with a conduit 48, such as a tube, a pipe or a duct, that is arranged in the second chamber 8 such that its first end is at lower position than its second end. The conduit 48 leads or draws humidified air away from the humidifier 11 and intensifies flowing of humidified air. In the embodiment shown in Figure 6, the conduit 48 leads or draws humidified air upwards. In another embodiment, the conduit 48 leads or draws humidified air downwards. In one embodiment, a humidifier fan 12 is arranged in the conduit 48, either push or draw humidified air in the conduit.

In one embodiment of the arrangement, the bottom 18 of the first chamber is shaped as sloping towards the passage arranged therein, such as the second passage 47. In another embodiment, the bottom may be in a horizontal position, sloping, etc.

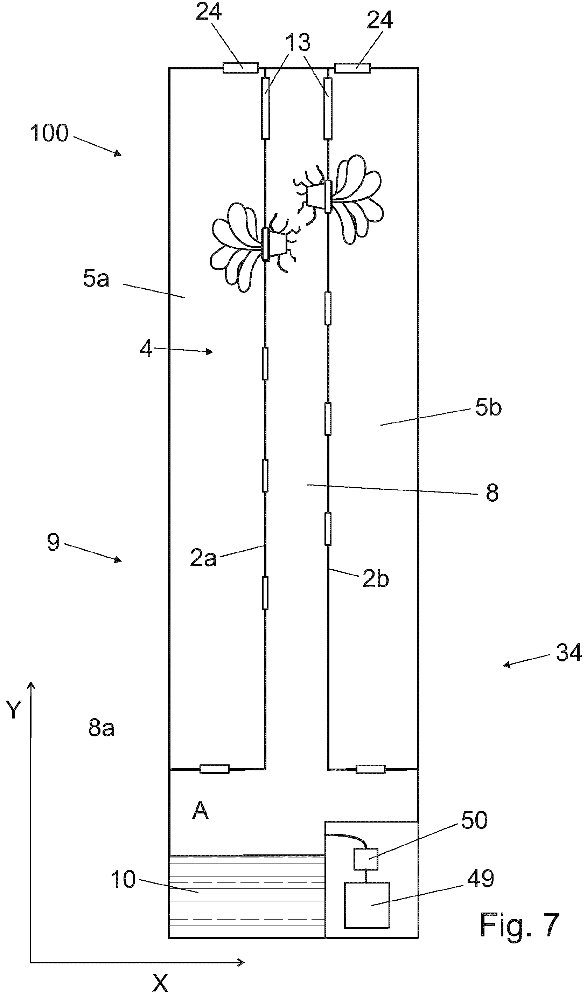

**Figure 7** is a schematic side view of a sixth arrangement and method for vertical cultivation in partial cross-section. In one embodiment of the arrangement, the arrangement comprises plurality of support walls and holder 1 arranged therein. The embodiment shown in Figure 7 comprises two support walls 2a, 2b that are arranged on opposite sides of one second chamber 8. In other words, one second chamber 8 may serve in cultivation of plants on two (or even more) support walls.

In one embodiment, such as shown in Figure 7, each of the support walls 2a, 2B is bordering a respective first chamber 5a, 5b.

In one embodiment, the arrangement 100 is provided with at least one additive reservoir 49 and an additive pump 50. The additive reservoir 49 can be filled with at least one additive, and the additive pump 50 is arranged to dispense the additive(s) in the liquid reservoir 10. The pump is preferably controlled by the control unit described in this description. The additive may be, e.g., a nutrient or a pH agent. In embodiments that comprise plurality of additive reservoirs 49, and respective additive pumps 50, the reservoirs may comprise different additives.

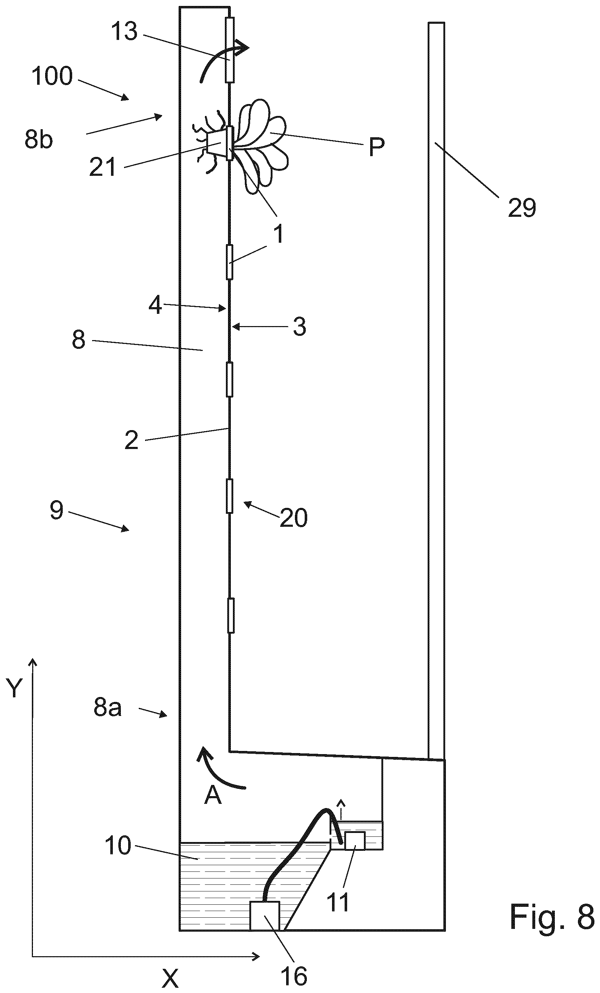

**Figure 8** is a schematic side view of a seventh arrangement and method for vertical cultivation in partial cross-section. In one embodiment, the arrangement 100 does not comprise the first chamber 5. In other words, at least one, or in some embodiments all, of first chamber walls defining the first chamber is/are missing. Even the roof (such as shown in Figure 1) may be missing. Thus, the aerial parts of the plants P are at least partly unshielded. In one embodiment, such as shown in Figure 8, at least one light unit 29 may be provided for lighting the plants.

The invention is not limited solely to the embodiments described above, but instead many variations are possible within the scope of the inventive concept defined by the claims below. For example, in some embodiments the support wall 2 extends to bottom of the arrangement and the liquid reservoir 10 is fitted in its backside in the second chamber 8. Within the scope of the inventive concept the attributes of different embodiments and applications can be used in conjunction with or replace the attributes of another embodiment or application.

The drawings and the related description are only intended to illustrate the idea of the invention. The invention may vary in detail within the scope of the inventive idea defined in the following claims.

### REFERENCE SYMBOLS

- 1: holder
- 2: support wall
- 3: first side
- 4: second side
- 5: first chamber
- 6a-c: first chamber wall
- 7: transparent area
- 8: second chamber
- 8a, b: ends of second chamber
- 9: irrigation arrangement
- 10: liquid reservoir
- 11: humidifier
- 12: humidifier fan
- 13: first passage
- 14: device reservoir
- 15: emptying arrangement
- 16: pump
- 17: air channel
- 18: bottom
- 19: means for preventing light
- 20: holder opening
- 21: plant cartridge
- 22: frame of first chamber
- 23: layer of reflective material
- 24: air permeable section
- 25: means for conducting air
- 26: air fan
- 27: air feed channel
- 28: light source
- 29: light unit
- 30: light group
- 31: room for separate treatment
- 32: separate treatment holder
- 33: removable cover
- 34: sensor arrangement
- 35: roof
- 36: control unit
- 37: filter element
- 38: first temperature sensor
- 39: second temperature sensor
- 40: first humidity sensor
- 41: second humidity sensor
- 42: camera
- 43: scale
- 44: breathing opening
- 45: additional passage
- 46: CO₂ sensor
- 47: second passage
- 48: conduit
- 49: additive reservoir
- 50: additive pump
- 51: water filtering and/or cleaning system

- 100: arrangement

- A: air flow
- LH: lower half
- P: plant
- UH: upper half
- X: the horizontal
- Y: vertical direction

## Claims

1. A vertical cultivation arrangement for growing plants, the arrangement (100) comprising
- holders (1) for holding the plants (P), the holders being arranged in
- a vertically arranged support wall (2) such that aerial parts of the plants (P) arrangeable in the holders (1) are positioned on a first side (3) of the support wall and at least most of root parts of said plants (P) are positioned on a second side (4) of the support wall,
- a second chamber (8) on the second side (4) of the support wall,
- an irrigation arrangement (9) configured to irrigate the plants (P), said irrigation arrangement comprising
- a liquid reservoir (10) for storing irrigation liquid,
- a humidifier (11) configured for creating mist from said irrigation liquid,
- a first passage (13) from the second chamber (8) to the opposite side of the support wall (2) arranged in a first end (8b) of the second chamber for providing an access of said humidified air from the second chamber (8) to the opposite side of the support wall (2), such that both the root parts and the aerial parts of the plants (P) are irrigated with said humidified air.

2. The arrangement as claimed in claim 1, wherein
- the humidifier (11) comprises an ultrasonic device.

3. The arrangement as claimed in any of the preceding claims, wherein
- the second end (8a) of the second chamber is arranged lower than the first end (8b) thereof, and
- the humidifier (11) is arranged in a lower half (LH) of the arrangement.

4. The arrangement as claimed in claim 3, wherein
- the first passage (13) comprises an opening arranged to the support wall (2) above the holders (1), or at least at same level as the upmost holder (1).

5. The arrangement as claimed in any of claims 1-2, wherein
- the second end (8a) of the second chamber is arranged higher than the first end (8b) thereof, and
- the humidifier (11) is arranged above the holders (1), or at least at same level as the upmost holder (1).

6. The arrangement as claimed in any of the preceding claims, wherein
- the holder (1) comprises an opening (20) in the support wall, and
- the plant (P) is arranged in a plant cartridge (21) that is removably arrangeable in the holder (1).

7. The arrangement as claimed in any of the preceding claims, comprising
- a first chamber (5) arranged on the first side (3) of the support wall, the first chamber (5) being defined by said support wall (2) and at least one first chamber wall (6a, 6b ,6c).

8. The arrangement as claimed in claim 7, wherein
- at least one of said at least one first chamber wall (6a, 6b ,6c) comprises a transparent area (7) transparent to visible light.

9. The arrangement as claimed in claim 8, wherein
- the transparent area (7) is provided with a layer (23) of reflective and/or light transmission limiting material configured to limit visible light exiting from the first chamber (5) out to surroundings of the arrangement through said transparent areas.

10. The arrangement as claimed in any of the preceding claims, comprising
- an air permeable section (24) in the upper part of the arrangement, allowing humidified air to penetrate out from the arrangement (100).

11. The arrangement as claimed in any of the preceding claims, comprising
- a means for feeding air (25) to the first chamber (5) from surroundings of the arrangement.

12. The arrangement as claimed in any of the preceding claims, comprising
- a room for separate treatment (31),
- said room (31) comprising separate treatment holders (32) and, optionally,
- a removable cover (33) arranged for creating a separate treatment atmosphere on the separate treatment holders (32).

13. The arrangement as claimed in any of the preceding claims, comprising
- a humidifier fan (12) configured to
- - create humidified air by contacting said air with mist created by the humidifier (11), and
- - direct said humidified air to the second chamber (8) at a second end (8a) thereof.

14. A method for growing plants having an aerial part and a root part in a vertical cultivation arrangement (100), the arrangement comprising
- holders (1) for holding the plants (P), the holders being arranged in
- a vertically arranged support wall (2) such that aerial parts of the plants (P) arrangeable in the holders (1) are positioned on a first side (3) of the support wall and at least most of root parts of said plants (P) are positioned on a second side (4) of the support wall,
- a second chamber (8) on the second side (4) of the support wall,
- an irrigation arrangement (9) configured to irrigate the plants (P), said irrigation arrangement comprising
- a liquid reservoir (10) for storing irrigation liquid,
- a humidifier (11) configured for creating mist from said irrigation liquid,
- a first passage (13) from the second chamber (8) to the opposite side of the support wall (2) and arranged in a first end (8b) of the second chamber for providing an access of said humidified air from the second chamber (8) to the opposite side of the support wall (2), wherein the method comprises
- arranging plants to at least one holder (1),
- creating humidity with the humidifier (11),
- allowing said humidity to enter the second chamber (8),
- allowing said humidity to flow from the second chamber (8) through the first passage (13) the opposite side of the support wall (2),
- thereby irrigating both the root parts and the aerial parts of the plants with humidity flowing through the second chamber (8) towards the first passage (13) and the opposite side of the support wall (2) and back in the second chamber (8).

15. The method as claimed in claim 14, wherein the vertical cultivation arrangement (100) comprises
- a room for separate treatment (31),
- said room (31) comprising separate treatment holders (32), and wherein the method comprises
- arranging at least one plant (P), cutting or seed in the room for separate treatment (31),
- allowing the plant (P), cutting or seed to grow or mature in said room (31),
- removing the plant, cutting or seed from said room (31), and
- arranging the plant, cutting or seed in the holder (1) arranged in the support wall (2) for further growing.
